# NEUE EUROPÄISCHE PATENTSCHRIFT

(11) **EP 2 934 903 B2**
(45) Veröffentlichungstag und Bekanntmachung des Hinweises auf die Entscheidung über den Einspruch: **15.06.2022**
(45) Hinweis auf die Patenterteilung: 14.02.2018
(21) Anmeldenummer: 13811930.0
(22) Anmeldetag: 19.12.2013
(51) Int. Cl.: B42D 25/324, B42D 25/351, B42D 25/45

(54) **SICHERHEITSMERKMAL FÜR EIN WERT- UND/ODER SICHERHEITSPRODUKT, DAS SICHERHEITSMERKMAL AUFWEISENDES WERT- UND/ODER SICHERHEITSPRODUKT UND VERFAHREN ZUM HERSTELLEN DES SICHERHEITSMERKMALS**
SECURITY FEATURE FOR A VALUE AND/OR SECURITY PRODUCT, VALUE AND/OR SECURITY PRODUCT HAVING THE SECURITY FEATURE AND METHOD FOR PRODUCING THE SECURITY FEATURE
CARACTÉRISTIQUE DE SÉCURITÉ POUR UN PRODUIT DE VALEUR ET/OU DE SÉCURITÉ, PRODUIT DE VALEUR ET/OU DE SÉCURITÉ COMPRENANT LA CARACTÉRISTIQUE DE SÉCURITÉ ET PROCÉDÉ POUR PRODUIRE LA CARACTÉRISTIQUE DE SÉCURITÉ

(30) Priorität: 20.12.2012 DE 102012224006; 27.02.2013 DE 102013203303
(43) Veröffentlichungstag der Anmeldung: 28.10.2015
(73) Patentinhaber: Bundesdruckerei GmbH, 10969 Berlin (DE)
(72) Erfinder: PEINZE, Franziska, 12589 Berlin (DE); MATHEA, Arthur, 14199 Berlin (DE); KULIKOVSKA, Olga, 14165 Berlin (DE); TRÖLENBERG, Stefan, 15749 Mittenwalde OT Ragow (DE); DRESSEL, Olaf, 14641 Wustermark (DE); SPRINGMANN, Edward, 10249 Berlin (DE)
(74) Vertreter: Patentanwälte Bressel und Partner mbB
(86) Internationale Anmeldenummer: PCT/EP2013/077340
(87) Internationale Veröffentlichungsnummer: WO 2014/096167

(56) Entgegenhaltungen:
- EP-A1- 0 609 683
- EP-A1- 2 444 826
- EP-A2- 1 953 002
- WO-A1-2011/116419
- WO-A2-2008/029128
- US-A1- 2008 191 463
- US-A1- 2009 121 473
- US-A1- 2012 281 294

## Beschreibung

Die vorliegende Erfindung betrifft ein modifiziertes Sicherheitsmerkmal für ein Wert- und/oder Sicherheitsprodukt, das mindestens ein derartiges Sicherheitsmerkmal enthaltende Wert- und/oder Sicherheitsprodukt und ein Verfahren zum Herstellen des modifizierten Sicherheitsmerkmals. Ein Wert- und/oder Sicherheitsprodukt ist insbesondere ein Wert- und/oder Sicherheitsdokument oder Sicherheitselement. Es kann beispielsweise ein Personaldokument, insbesondere ein Personalausweis, oder ein Zahlungsmittel, insbesondere eine Banknote, sein. Derartige Dokumente werden typischerweise in normierten Formaten hergestellt, beispielsweise im ID 1-, ID 2- oder ID 3-Format gemäß ISO 7810. Die Dokumente können grundsätzlich aus einem organischen Polymer oder einem Keramikwerkstoff, Papier, Pappe, Glas oder aus Metall bestehen oder dieses enthalten. Karten und kartenförmige Bestandteile von buchartigen Dokumenten können vorzugsweise aus miteinander laminierten Polymerfolien hergestellt sein. Zur Prüfung der Echtheit und/oder zur Kodierung von Information weisen diese Produkte Sicherheitsmerkmale auf.

Die in den Wert- und/oder Sicherheitsprodukten eingesetzten Sicherheitsmerkmale können ausschließlich dazu dienen, die Echtheit der Produkte unabhängig von ihrer Art oder von ihrem Benutzer nachzuweisen. Derartige Sicherheitsmerkmale sind beispielsweise Guillochen, Wasserzeichen, Prägedrucke, Hologramme, das Spezialpapier von Banknoten und dergleichen. Individualisierende, beispielsweise personalisierende, Sicherheitsmerkmale enthalten darüber hinaus in kodierter Form oder auch in Klarschrift eine Information über die Art des Dokuments, über dessen Inhaber und/oder über einen Artikel, dem das Dokument zugeordnet ist. Derartige Informationen können ein Gesichtsbild/Portrait (beispielsweise in Form einer Photographie) des Inhabers, seine persönlichen Daten, wie der Name, Geburtstag, Geburtsort, die Unterschrift, eine persönliche Kennung, wie eine Mitgliedsnummer, oder biometrische Daten des Inhabers sein, beispielsweise Fingerabdrücke, Iris- und Retinaerkennung. Ein anderes das Dokument individualisierendes Sicherheitsmerkmal kann beispielsweise eine Seriennummer des Dokuments oder die Fahrgestellnummer eines Kraftfahrzeuges sein, dem das Dokument zugeordnet ist.

In EP 0 238 043 A2 ist ein Wertpapier mit darin eingelagertem transparentem Sicherheitsfaden beschrieben. Der Sicherheitsfaden weist auf einer Seite ein Druckbild und auf der gegenüberliegenden Seite, abgestimmt zum Druckbild, eine Linsenstruktur auf. Die Linsenstruktur ist beispielsweise durch mehrere parallel laufende Zylinderlinsen gebildet, die in das Material des Sicherheitsfadens eingeprägt sind. Aufgrund der fokussierenden Wirkung der Zylinderlinsen und der Lage des Druckbildes in der Fokusebene sind je nach Blickwinkel unterschiedliche Teilbereiche des Druckbildes sichtbar. Ein derartiger Sicherheitsfaden ist daher photographisch oder kopiertechnisch nicht reproduzierbar.

In DE 10 2005 028 162 A1 ist ein Sicherheitselement mit einem ersten und einem zweiten Echtheitsmerkmal zur Absicherung von Wertgegenständen beschrieben, wobei das erste Echtheitsmerkmal eine erste Anordnung mit einer Vielzahl von linsenförmigen Elementen, die in einem ersten Raster vorliegen, und eine zweite Anordnung mit einer Vielzahl von mikroskopischen Strukturen, die in einem zweiten Raster vorliegen, aufweist. Die mikroskopischen Strukturen sind bei Betrachtung durch die linsenförmigen Elemente in Vergrößerung zu sehen. Die beiden Raster weisen geringfügig unterschiedliche oder gleiche Rasterweiten auf, sodass entweder ein Moire-Vergrößerungseffekt entsteht oder sich Wechselbildeffekte ergeben.

In US 2008/0231976 A1 ist ferner ein Sicherheitselement auf der Basis von Mikroprismen beschrieben, das mindestens zwei Bereiche mit jeweils einem Array von im Wesentlichen planaren Prismenflächen aufweist. Durch interne Totalreflexion bildet jeder Bereich eine reflektierende Fläche aus, wenn die Fläche unter einem ersten Winkel betrachtet wird, und eine transparente Fläche, wenn diese unter einem zweiten Winkel betrachtet wird. In einer der beschriebenen Ausführungsformen sind die Flächen, in denen sich die Prismenarrays befinden, in Form eines Bildmusters gebildet.

In DE 10 2007 007 914 A1 ist eine mikrooptische Anordnung beschrieben, die mittels eines hochbrechenden Prägelackes gebildet ist. Die mikrooptische Anordnung kann durch eine Anordnung von Mikrolinsen gebildet sein. Unterhalb der Mikrolinsen befinden sich Mikrostrukturen, sogenannte Mikromotivelemente, die eine Größe in etwa derselben Größenordnung wie die Mikrolinsen haben. Das Gitter dieser Mikromotivelemente unterscheidet sich in seiner Symmetrie und/oder der Größe seiner Gitterparameter geringfügig von dem Gitter der Mikrolinsen, oder die Mikromotivelemente sind genau in der Rasterweite der Mikrolinsen gedruckt. Im ersteren Falle wird ein Moire-Vergrößerungseffekt erzeugt, im letzteren Falle ein sogenanntes Flashbild.

Diese Sicherheitsmerkmale sind nicht ohne weiteres nachahmbar oder verfälschbar. Insbesondere erfordert deren Herstellung aufwändige Produktionstechniken, die einem Fälscher im Allgemeinen nicht zur Verfügung stehen. Insbesondere sind diese Sicherheitsmerkmale auch besonders gut als Schutz gegen eine Kopie eines damit versehenen Dokuments geeignet, da diese Sicherheitsmerkmale mittels eines herkömmlichen digitalen Druckverfahrens nicht kopierbar sind.

Die bekannten Sicherheitsmerkmale auf der Grundlage von Mikrolinsen und Mikroprismen dienen zur Darstellung von Mustern, die als Echtheitsmerkmale dienen. Allerdings können diese Sicherheitsmerkmale nicht für ein bestimmtes Dokument, eine bestimmte Person oder einen bestimmten Artikel, der/dem dieses Dokument zugeordnet ist, individualisiert werden, da mit diesen Sicherheitsmerkmalen individualisierte Strukturen bzw. individualisierte Motive mit vertretbarem Aufwand nicht erzeugt werden können. Eine Individualisierung dieser Sicherheitsmerkmale wäre von Vorteil, weil diese eine Verbesserung des Schutzes gegen Nachahmung als Echtheitsmerkmal bieten würde. Nicht individualisierte Sicherheitsmerkmale können zwar schwierig zu reproduzierende Merkmale darstellen, haben aber keinen Bezug zu dem konkreten Dokument, dem Dokumententräger oder einem dem Dokument zugeordneten Artikel. Darüber hinaus sind die oben angegebenen Sicherheitsmerkmale hinlänglich bekannt, sodass Methoden zu deren Herstellung zumindest für Fachleute ohne weiteres verfügbar sind.

Aus US 2012/0281294 A1 geht ein Sicherheitselement hervor, das ein Substrat umfasst, das an mindestens einer von dessen Seiten eine mindestens ein Bild mindestens eines Musters erzeugende optische Struktur und einen Kleber, beispielsweise einen heißsiegelbaren Lack, der die Seite des Substrats zumindest teilweise bedeckt, ohne die optische Struktur vollständig zu bedecken, aufweist. Durch den Lack werden die optischen Effekte, die von der optischen Struktur hervorgerufen werden, ausgelöscht. Hierzu hat der Lack im Wesentlichen denselben Brechungsindex wie die optische Struktur.

EP 1 953 002 A2 offenbart ein Sicherheitselement, das einen streifenförmigen Mehrschichtkörper mit einer Trägerfolie und mindestens einer Dekorschicht sowie eine erste und eine zweite Kleberschicht umfasst. In einer Ausführungsform ist auf einer Trägerfolie eine UV-härtbare Replizierlackschicht gebildet, in die eine Oberflächenstruktur in Form eines durchgängigen Mikrolinsenfeldes abgeformt ist. Eine Kleberschicht ist bereichsweise in einem vorgegebenen, repetitiven Muster auf die Oberfläche der Replizierlackschicht aufgedruckt, sodass bedeckte und unbedeckte Bereiche entstehen. Durch den Kleber der Kleberschicht wird die in die Oberfläche des Replizierlackes abgeformte Oberflächenstruktur verfüllt und so deren optische Wirkung ausgelöscht oder erheblich abgeschwächt, sodass die bedeckten Bereichen optisch weitgehend als Spiegelfläche wirken.

WO 2008/0291128 A2 offenbart ein Sicherheitselement, umfassend ein transparentes Substrat, das prismatische Oberflächenstrukturen aufweist. Das Sicherheitselement ist über einen Teil der Oberflächenstrukturen mittels einer Kleberschicht mit der Oberfläche eines weiteren Substrats verbunden, während andere Strukturen an Luft angrenzen. In letzteren Bereichen bildet sich eine transparente Substrat/Luft-Grenzfläche aus, sodass die prismatischen Oberflächenstrukturen unter einem ersten Betrachtungswinkel einen Reflektor bilden und unter einem zweiten Betrachtungswinkel transparent sind.

Von daher besteht eine der der vorliegenden Erfindung zugrunde liegenden Aufgaben darin, ein Sicherheitsmerkmal zu finden, das mindestens eine Eigenschaft des Wert- und/oder Sicherheitsproduktes und/oder eine Eigenschaft einer dem Produkt zugeordneten Person oder eines dem Produkt zugeordneten Artikels kodiert. Das Sicherheitsmerkmal soll ferner mit einfachen Mitteln und Kosten sowie mit geringem logistischem Aufwand individualisierbar sein. Das zu schaffende Sicherheitsmerkmal soll eine sehr hohe Hürde gegen Nachahmung oder Verfälschung oder Kopie des damit versehenen Dokuments darstellen. Mit dem Sicherheitsmerkmal soll somit das Sicherheitsniveau gegenüber herkömmlichen Wert- und/oder Sicherheitsdokumenten oder Sicherheitselementen erhöht werden. Der vorliegenden Erfindung liegt von daher auch die Aufgabe zugrunde, eine Lösung zur einfachen und kostengünstigen Herstellung von weiter entwickelten Sicherheitsmerkmalen zu schaffen.

Soweit in der Beschreibung und in den Ansprüchen der vorliegenden Anmeldung der Begriff ,Wert- und/oder Sicherheitsprodukt', das insbesondere ein Wert- und/oder Sicherheitsdokument oder ein Sicherheitselement sein kann, verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton oder ein anderes Dokument zu verstehen. Ein erfindungsgemäßes Produkt kann auch ein Sicherheitselement, beispielsweise ein Aufkleber, Haftetikett (beispielsweise zur Artikelsicherung) oder dergleichen, sein, das das erfindungsgemäße Sicherheitsmerkmal aufweist und das mit einem Vorprodukt eines Wert- und/oder Sicherheitsdokuments oder eines anderen Artikels, beispielsweise mit einem zu markierenden Produkt, dessen Echtheit zu garantieren ist, unlösbar verbunden werden kann, um das Wert- und/oder Sicherheitsdokument oder diesen markierten Artikel zu bilden. Dieser Artikel kann beispielsweise ein Exemplar aus einer limitierten Serie gleichartiger Produkte sein, dessen Einzigartigkeit mittels einer Nummerierung dokumentiert wird. Diese Nummerierung kann durch die Individualisierung des mit dem Sicherheitsmerkmal versehenen Sicherheitselements realisiert werden. Das Wert- und/oder Sicherheitsprodukt kann beispielsweise auch eine Smartcard sein. Das Wert- und/oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- und/oder Sicherheitsprodukt ist im Allgemeinen ein Laminat aus mehreren Dokumentenlagen, die passergenau unter Wärmeeinwirkung und unter erhöhtem Druck flächig miteinander verbunden worden sind. Diese Produkte sollen den normierten Anforderungen genügen, beispielsweise gemäß ISO 10373, ISO/IEC 7810, ISO 14443. Die Produktlagen bestehen beispielsweise aus einem Trägermaterial, das sich für eine Lamination eignet.

Das Wert- und/oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise ein kinegraphisches Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Soweit in der Beschreibung und in den Ansprüchen der vorliegenden Anmeldung der Begriff 'Sicherheitsmerkmal' genannt wird, ist darunter ein Merkmal zu verstehen, das vorzugsweise einen mittels optischer Erkennungsverfahren erfassbaren optischen Eindruck hervorruft, der durch eine optisch wahrnehmbare Gestaltung erzeugt wird. Die Gestaltung des optisch wahrnehmbaren Sicherheitsmerkmals kann ein- oder mehrfarbig, schwarz/weiß oder in Grautönen ausgebildet sein. Die Gestaltung beinhaltet vorzugsweise eine optisch wahrnehmbare individualisierende Information. Das Sicherheitsmerkmal kann dazu ausgebildet sein, von einem Benutzer unmittelbar wahrgenommen zu werden, oder es kann sich um ein maschinenlesbares Merkmal handeln. In letzterem Falle wird das Sicherheitsmerkmal mittels einer beispielsweise elektromagnetische Strahlung ortsaufgelöst aufnehmenden Vorrichtung erfasst, ausgegeben und durch einen Betrachter wahrgenommen oder mittels einer hierfür vorgesehenen weiteren Vorrichtung ausgewertet.

Soweit in der Beschreibung und in den Ansprüchen der vorliegenden Anmeldung der Begriff 'Muster' genannt wird, ist darunter eine beliebige zweidimensionale Anordnung mindestens einer Struktur auf einer Substratoberfläche zu verstehen. Ein Muster kann jede abstrakte oder gegenständliche Form aufweisen und beispielsweise aus Linien, Flächen, auch in beliebiger Zusammenstellung, oder alternativ aus Zeichen, wie alphanumerischen Zeichen, bestehen oder Bilder wiedergeben, beispielsweise das Photo des Dokumenteninhabers oder Darstellungen von bestimmten Objekten. Es können auch beliebige andere Informationen grafisch dargestellt werden.

Die der vorliegenden Erfindung zugrunde liegenden Aufgaben werden durch die vorliegende Erfindung gelöst.

Gemäß einem ersten Aspekt betrifft die vorliegende Erfindung ein Sicherheitsmerkmal für ein Wert- und/oder Sicherheitsprodukt gemäß Anspruch 1.

Das mindestens eine optische Element ist in mindestens einem musterbildenden Bereich mit einem Strukturierungsmedium überlagert. Außerhalb des musterbildenden Bereiches steht die Oberseite des mindestens einen optischen Elements mit dem Umgebungsmedium oder mit einem Schutz- oder Decklack oder einer Folie in Kontakt. Das Strukturierungsmedium steht demnach mit dem mindestens einen optischen Element direkt in Kontakt, oder zwischen beiden befindet sich noch eine weitere dünne Lage.

Das Strukturierungsmedium ist transparent und weist einen dritten Brechungsindex n₃ auf, wobei der dritte Brechungsindex n₃ größer ist als der erste Brechungsindex n₁.

Gemäß einem zweiten Aspekt betrifft die vorliegende Erfindung ein mindestens ein erfindungsgemäßes Sicherheitsmerkmal aufweisendes Wert- und/oder Sicherheitsprodukt.

Gemäß einem dritten Aspekt betrifft die vorliegende Erfindung ein Verfahren zum Herstellen des erfindungsgemäßen Sicherheitsmerkmals gemäß Anspruch 9.

Das Strukturierungsmedium ist transparent und weist einen dritten Brechungsindex n₃ auf, wobei der dritte Brechugnsindex n₃ größer ist als der erste Brechungsindex n₁.

Das Strukturierungsmedium kann vielfältig gestaltet sein. In allen diesen Gestaltungen überlagert es das optische Element in dem mindestens einen musterbildenden Bereich, sodass das optische Element musterbildend strukturiert wird und ein Betrachter diese Strukturierung daher optisch wahrnehmen kann. Die Überlagerung führt zu einer Modifizierung des optischen wahrnehmbaren Eindruckes des ansonsten statischen optischen Elements in den überlagerten Bereichen. In der Folge erscheint das optische Element in den nicht modifizierten Bereichen in der ursprünglichen Gestaltung, während das Sicherheitsmerkmal in den überlagerten Bereichen einen veränderten optischen Eindruck erzeugt. Somit erscheint zum einen das optische Element selbst, d.h. bereits ohne diese Strukturierung, als Sicherheitsmerkmal, und zum anderen ist für einen Betrachter durch die Strukturierung eine weitere Gestaltung in einer beliebig gestaltbaren Form wahrnehmbar.

Die Form des mindestens einen musterbildenden Bereiches, in dem das optische Element mit dem Strukturierungsmedium überlagert ist, kann dazu durch eine beliebige zweidimensionale Verteilung des Strukturierungsmediums über oder auf dem optischen Element realisiert sein. Dadurch wird das optische Element so beeinflusst, dass dieses im musterbildenden Bereich optisch neutralisiert oder zumindest modifiziert wird. Dadurch werden bestimmte Teile des optischen Elements in Form einer zusätzlichen, beispielsweise individualisierenden, Information gebildet. Das Muster, in dem das Strukturierungsmedium über oder auf dem mindestens einen optischen Element gebildet ist, kann gerastert oder ungerastert vorliegen. Die Bereiche, in denen sich das Strukturierungsmedium über oder auf dem mindestens einen optischen Element befindet, können in einer regelmäßigen Anordnung oder in einer unregelmäßigen (stochastischen) Anordnung vorliegen. Falls das Muster gerastert ist, können diese Bereiche beispielsweise in einer hexagonalen Anordnung vorliegen. Sie können beispielsweise durch einfache geometrische Formen gebildet sein, beispielsweise durch Kreise, Quadrate, Rechtecke, Sechsecke, langgestreckte Gebilde, wie Striche, Ellipsen, und dergleichen.

Gemäß der vorliegenden Erfindung ist das Strukturierungsmedium transparent und weist einen dritten Brechungsindex n₃ auf, wobei der dritte Brechungsindex n₃ größer ist als der erste Brechungsindex n₁. Durch die Festlegung, dass der dritte Brechungsindex n₃ des Strukturierungsmediums größer ist als der erste Brechungsindex n₁ des optischen Elements, wird ein spezieller Effekt erreicht: Bei einer Ausbildung des optischen Elements in Form von konvexen linsenförmigen Strukturen wird das Vorhandensein einer konkaven linsenförmigen Struktur simuliert und umgekehrt. Dadurch wird ein völlig anderer optischer Effekt als mit herkömmlichen Konvexlinsenstrukturen erzielt. Bei einer Ausbildung des optischen Elements in Form von prismenförmigen Strukturen wird eine Totalreflexion innerhalb dieser Strukturen vollständig verhindert, sodass das optische Element in den mit dem Strukturierungsmedium versehenen Bereichen transparent erscheint.

Somit stehen zum einen eine Individualisierungsmöglichkeit von optischen Elementen und zum anderen neuartige optische Effekte zur Verfügung. Außerdem kann das Strukturierungsmedium zusätzlich auch als Schutzlack dienen.

Erfindungsgemäß bildet das Strukturierungsmedium über oder auf dem mindestens einen optischen Element eine Kennzeichnung. Hierzu bilden die Bereiche zusammen ein zweidimensionales Muster, das eine Information kodiert und personalisierend ist. Beispielsweise kann das Muster ein oder mehrere alphanumerische oder andere Zeichen, ein Bild, ein Wappen, ein Logo oder dergleichen bilden. Die Kennzeichnung ist durch die besondere Struktur des mindestens einen musterbildenden Bereiches gebildet. Die Kennzeichnung ist dazu ausgebildet, personalisierend zu sein. Beispielsweise kann der mindestens eine musterbildende Bereich eine Information kodieren, die das damit gekennzeichnete Dokument oder einen damit gekennzeichneten Artikel personalisiert. Insbesondere kann der mindestens eine musterbildende Bereich in Form mehrerer alphanumerischer Zeichen gebildet sein, die eine Kennung für das Dokument oder den Artikel selbst darstellen. Der mindestens eine musterbildende Bereich stellt eine personalisierende Kennzeichnung für die Person, der das Dokument oder der Artikel zugeordnet ist, dar und kodiert hierzu für eine der Person zugeordnete Information, beispielsweise in Form einer alphanumerischen Zeichenfolge, die in Klarschrift oder in verschlüsselter Form individuelle Daten dieser Person wiedergibt, etwa den Namen, das Geburtsdatum oder den Geburtsort dieser Person. Alternativ kann die Kennzeichnung auch in Form des Gesichtsbildes dieser Person, eines Abbildes eines Fingerabdruckes oder einer anderen Kennung der Person gebildet sein. Im Falle eines dem Dokument zugeordneten Gegenstandes kann die Kennung beispielsweise in der in alphanumerischen Zeichen abgebildeten Fahrgestellnummer eines Kraftfahrzeuges auf einem Kraftfahrzeugbrief bestehen. Ferner kann die Kennung auch für eine Information kodieren, die eine private oder geschäftliche Angelegenheit der Person, der das Dokument oder der Artikel zugeordnet ist, individualisiert, beispielsweise eine Nummer eines Bankkontos der Person.

Das mindestens eine optische Element ist vorzugsweise auf einem Substrat aufgebracht oder in dieses eingebracht. Das Substrat kann in Form einer Folie oder in Form eines starreren Gegenstandes als einer Folie, wie in Form einer Platte oder Karte, vorliegen. Das Substrat kann in Form eines Bogens/Blattes bzw. einer Platte/Karte oder eines Bandes vorliegen. Es kann einlagig oder aus mehreren Lagen gebildet sein. Es kann aus einem der für das Wert- und/oder Sicherheitsprodukt genannten Polymere hergestellt sein und ungefüllt oder mit Füllstoffen, wie Pigmenten, Verstärkungsmaterialien, etwa Fasern, gefüllt vorliegen. Das Substrat kann demnach transparent oder transluzent (zwar nicht oder kaum lichtabsorbierend, aber lichtstreuend) oder opak sein. Es kann ferner ungefärbt sein oder mit im sichtbaren, UV- und/oder IR-Spektralbereich absorbierenden und/oder emittierenden Farbstoffen, einschließlich Lumineszenzstoffen, gefärbt sein (d.h. in diesen Spektralbereichen absorbieren und/oder emittieren). Das Substrat kann ein Vorprodukt (Rohling) für ein Wert- und/oder Sicherheitsdokument sein und zusätzlich zu dem erfindungsgemäßen Sicherheitsmerkmal weitere Sicherheitsmerkmale, beispielsweise Guillochen, einen Sicherheitsfaden, Mikroschrift, ein fluoreszierendes Druckmuster oder einen Durchsichtspasser, aufweisen.

Das mindestens eine optische Element ist optisch brechend, d.h. einfallende elektromagnetische Strahlung, vorzugsweise im sichtbaren Spektralbereich, wird beim Eintritt in das und gegebenenfalls beim Wiederaustritt aus dem optischen Element gebrochen. Hierzu ist das optische Element zumindest in dem Spektralbereich transparent, in dem die Strahlung gebrochen wird, vorzugsweise im sichtbaren Spektralbereich. Das setzt nicht voraus, dass das optische Element die Strahlung in diesem Spektralbereich nicht absorbiert, sofern noch ein ausreichender Anteil hindurchtritt, damit ein Betrachter einen wahrnehmbaren optischen Effekt durch die Lichtbrechung wahrnimmt oder zumindest mittels apparativer Maßnahmen ein optischer Effekt durch die Lichtbrechung wahrnehmbar ist. Das optische Element soll aber insbesondere nicht lichtstreuend wirken.

Jeweils ein optisches Element kann in einer ersten Ausführungsform der vorliegenden Erfindung durch eine Anordnung von Mikrolinsen gebildet sein. Beispielsweise können diese Mikrolinsen Konvexlinsen sein, die vorzugsweise in einer regelmäßigen Anordnung, ganz besonders bevorzugt in einer rasterartigen Anordnung, vorliegen. Die Konvexlinsen können vorzugsweise sphärisch, grundsätzlich aber auch asphärisch geformt sein. Alternativ können die Mikrolinsen durch in einer regelmäßigen Anordnung angeordnete Stablinsen, insbesondere Zylinderlinsen, gebildet sein. Die Konvexlinsen können in einer regelmäßigen quadratischen oder hexagonalen Gitteranordnung vorliegen. Die Stablinsen können insbesondere parallel zueinander ausgerichtet und nebeneinander liegend angeordnet sein. Unterhalb der Mikrolinsenanordnung können sich in dem Substrat ferner Mikrostrukturen befinden, die vorzugsweise innerhalb einer Fokalebene der Mikrolinsen liegen, sodass sie von einem Betrachter durch die Mikrolinsen wahrgenommen werden können. Die Mikrostrukturen sind vorzugsweise Elemente mit einer Größenabmessung im Mikrometerbereich, insbesondere im Bereich von 1 bis 500 µm, weiter bevorzugt von 1 bis 250 µm und am meisten bevorzugt von 1 bis 100 µm. Auch die Mikrostrukturen können in einer regelmäßigen Anordnung vorliegen, vorzugsweise in einer Anordnung, die der der Mikrolinsen entspricht. Der Rasterabstand der Mikrolinsen einerseits zueinander und der Mikrostrukturen andererseits zueinander kann insbesondere in derselben Größenordnung liegen. Vorzugsweise sind die jeweiligen Rasterabstände identisch oder fast identisch. Im ersteren Falle erscheinen die Mikrostrukturen bei der Betrachtung durch die Mikrolinsenanordnung insbesondere vergrößert, wobei unter unterschiedlichen Betrachtungswinkeln benachbarte Mikrostrukturen erkennbar sind. Im letzteren Falle ergibt sich bei der Betrachtung durch die Mikrolinsenanordnung ein Moire-Effekt. Mit Mikrostablinsen variiert das Abbild der Mikrostrukturen ausschließlich bei einer Veränderung des Betrachtungswinkels zur Basisebene, in der die Stablinsen liegen, in einer Ebene senkrecht zur Basisebene und insbesondere senkrecht zu der Erstreckungsrichtung der Stablinsen, während das Abbild der Mikrostrukturen mit Mikrokonvexlinsen sowohl dann variiert, wenn der Betrachtungswinkel zur Basisebene der Konvexlinsen in einer ersten Ebene senkrecht zur Basisebene verändert wird, unabhängig davon, ob der Betrachtungswinkel auch senkrecht zu der Erstreckung der Stablinsen verändert wird oder nicht. Diese Anordnungen werden auch als CLI (changeable laser image) oder MLI (multiple laser image) bezeichnet (Sicherheitsmerkmale mit Kippeffekten). Eine Abbildung der Mikrostrukturen durch die Mikrolinsen ergibt sich in den Bereichen des optischen Elements, die von dem Strukturierungsmedium nicht bedeckt sind. In den von dem Strukturierungsmedium bedeckten Bereichen werden die darunter liegenden Mikrostrukturen nicht scharf oder überhaupt nicht mehr abgebildet. Es erscheinen lediglich Schemen oder Farbeffekte, wenn die Mikrostrukturen farbig sind.

Die Mikrolinsenanordnung kann insbesondere mit einem Prägeverfahren aus einem transparenten Polymermaterial hergestellt werden. Das Prägeverfahren kann entweder beim Laminieren mehrerer Lagen des Produktes mittels eines hierfür verwendeten Laminationsbleches, das die für die Abformung der Mikrolinsenanordnung erforderliche Oberflächenstruktur aufweist, durchgeführt werden oder durch Einprägen mittels Ultraschall in einem anderen Herstellungsverfahrensschritt als bei der Lamination, insbesondere nach der Fertigstellung des Laminats. Alternativ kann die Mikrolinsenanordnung auch durch Aufbringen einer Materialschicht mittels eines Druckverfahrens auf eine Produktlage hergestellt werden. Für das Polymermaterial der Mikrolinsenanordnung kann irgendeines der vorstehend für das Wert- und/oder Sicherheitsprodukt genannten Polymermaterialien eingesetzt werden. Die Mikrostrukturanordnung unterhalb der Mikrolinsenanordnung wird vorzugsweise durch ein Druckverfahren in/auf eine hierfür geeignete Schicht, die sich in der Fokalebene befindet, erzeugt. Alternativ kann die Mikrostrukturanordnung auch durch Einbringen von Laserschwärzungen erzeugt werden. Bezüglich der Herstellung eines Ensembles aus Mikrolinsenanordnung und darunter liegender Mikrostrukturanordnung wird beispielhaft auf DE 36 34 865 A1 verwiesen. In dieser Druckschrift ist ein Verfahren angegeben, mit dem im Inneren eines Dokuments mittels eines Laserstrahles durch ein Linsenraster hindurch eine optische Information durch Schwärzung des Materials erzeugt werden kann (Lasergravur).

Durch gezielte Applikation des Strukturierungsmediums mit den hierfür geeigneten Eigenschaften auf die Mikrolinsenanordnung werden die Linsenstrukturen so beeinflusst, dass deren optischer Eindruck in den musterbildenden Bereichen neutralisiert oder zumindest verändert wird. Dadurch erhalten bestimmte Teile des Wert- und/oder Sicherheitsprodukts Mikrolinsen in Form einer vorzugsweise individualisierenden Information, welche beispielsweise einen Kippeffekt hervorrufen und gleichzeitig in der lateralen Form auch eine Information (positiv/negativ) enthalten.

Ferner kann jeweils ein optisches Element in einer zweiten alternativen Ausführungsform der vorliegenden Erfindung durch eine Anordnung von Mikroprismen gebildet werden. In diesem Falle sind die Mikroprismen vorzugsweise Mikrostabprismen. Die Mikroprismen können insbesondere in einer regelmäßigen, vorzugsweise rasterförmigen, Anordnung auf oder innerhalb des Substratmaterials gebildet sein. Die Mikrostabprismen können vorzugsweise parallel zueinander und nebeneinander liegend angeordnet sein. Die Mikroprismen weisen beispielsweise eine Basisfläche und zwei Prismenseitenflächen auf. Vorzugsweise bilden die Basisfläche und die Seitenflächen zusammen mit den Grundflächen ein gleichschenkliges Mikroprisma.

Die Prismenseitenflächen aller Mikroprismen der Mikroprismenanordnung können in einer ersten bevorzugten Variante dieser zweiten Ausführungsform zur Betrachtungsseite und die Basisfläche zur entgegengesetzten Seite hin ausgerichtet sein. In diesem Falle ist die Mikroprismenanordnung auf der Betrachtungsseite des Wert- und/oder Sicherheitsproduktes angeordnet. Das Strukturierungsmedium überlagert die Mikroprismenanordnung in diesem Falle auf der Betrachtungsseite des Produktes. In einer zweiten bevorzugten Variante der zweiten Ausführungsform sind die Basisflächen der Mikroprismen der Mikroprismenanordnung der Betrachtungsseite zugewandt. Die Mikroprismenanordnung ist in diesem Falle auf der der Betrachtungsseite des Wert- und/oder Sicherheitsproduktes gegenüber liegenden Seite angeordnet, sodass Strahlung durch das Wert- und/oder Sicherheitsprodukt über die Basisflächen in die Mikroprismen einfällt. Das Strukturierungsmedium ist in diesem Falle auf der der Betrachtungsseite des Produktes gegenüber liegenden Seite angeordnet und überlagert die Mikroprismen auf dieser Seite in den musterbildenden Bereichen. Das Strukturierungsmedium steht auch in diesem Falle mit den Seitenflächen der Mikroprismen in Kontakt. Das Produkt muss für die Erzeugung des erwünschten optischen Effektes in dieser Ausführungsform zumindest in dem Bereich transparent sein, in dem sich die Mikroprismenanordnung befindet und dort zumindest ein transparentes Fenster aufweisen. Wenn das Material der Mikroprismen in der zweiten Ausführungsform einen höheren Brechungsindex n₁ hat als das an den Prismenseitenflächen anliegende Umgebungsmedium, bilden diese Seitenflächen unter bestimmten Betrachtungswinkeln Reflexionsflächen aus, da ein Lichtstrahl unter diesen Bedingungen an den Prismenseitenflächen totalreflektiert wird. In diesem Falle ist die Mikroprismenanordnung bei der Betrachtung durch das Wert- und/oder Sicherheitsprodukt hindurch nicht transparent sondern reflektierend. Unter anderen Betrachtungswinkeln kann die Mikroprismenanordnung jedoch transparent sein. Spezielle Anordnungen der Mikroprismen sind beispielhaft in US 2008/0231976 A1 angegeben.

Die Mikroprismen können wie die Mikrolinsen mit einem Prägeverfahren aus einem vorzugsweise transparenten Polymermaterial hergestellt werden. Hierzu wird auf die obige Beschreibung hinsichtlich der verschiedenen Herstellungsverfahrensvarianten (dort für Mikrolinsenanordnungen) verwiesen.

Die optischen Elemente können in Vertiefungen an der Produktoberfläche untergebracht sein, um zu vermeiden, dass die Elemente beim Gebrauch des Produkts abgerieben werden. Vorzugsweise können die Scheitel der optischen Elemente mit dem Niveau der Produktoberfläche abschließen. Prägewerkzeuge zur Herstellung von vertieft angeordneten Mikrolinsen sind in EP 0 842 791 A2 angegeben.

Das Material des mindestens einen optischen Elements ist transparent und vorzugsweise farblos. Es kann aber auch absorbierend sein, wobei es dann ebenfalls ausreichend transparent sein sollte, um den optischen Effekt noch wahrnehmen zu können. Falls das Material lichtabsorbierend ist, ist es vorzugsweise (ein)farbig. Hierzu kann das Material mit einem lasierenden Farbstoff eingefärbt sein. Ferner kann das Material des mindestens einen optischen Elements einen oder mehrere Lumineszenzstoffe enthalten, die im sichtbaren Spektralbereich absorbieren und demnach farbig erscheinen oder nicht absorbieren und demnach farblos sind. Die Lumineszenz kann im IR-, sichtbaren oder UV-Spektralbereich erscheinen. Die Lumineszenzstoffe können beispielsweise mittels Licht im UV-Bereich oder im sichtbaren oder IR-Bereich zur Lumineszenz angeregt werden.

In einer bevorzugten Weiterbildung der vorliegenden Erfindung befindet sich das Strukturierungsmedium im Kontakt mit dem mindestens einen optischen Element, oder es liegt auf einer dünnen Schicht auf, die sich zwischen dem Strukturierungsmedium und dem optischen Element befindet. Auf dem optischen Element bildet das Strukturierungsmedium in den musterbildenden Bereichen eine im Wesentlichen nivellierende Schicht aus. Gemäß der vorliegenden Erfindung ist das Strukturierungsmedium transparent. In diesem Falle strukturiert das Strukturierungsmedium das optische Element ebenfalls, allerdings durch Modifizierung des optischen Effektes des optischen Elements.

Falls das transparente Strukturierungsmedium einen dritten Brechungsindex n₃ aufweist, der sich vom zweiten Brechungsindex n₂ des Umgebungsmediums unterscheidet, unterscheiden sich die optischen Eigenschaften des optischen Elements in den nicht mit dem Strukturierungsmedium überlagerten Bereichen von den optischen Eigenschaften des optischen Elements in den mit dem Strukturierungsmedium überlagerten Bereichen. Unabhängig von der Größe des dritten Brechungsindex n₃ des Strukturierungsmediums wird der Strahlengang von in das optische Element einfallender Strahlung so modifiziert, dass eine optische Bedingung, die in den nicht mit dem Strukturierungsmedium modifizierten Bereichen gilt, in den von dem Strukturierungsmedium überlagerten Bereichen nicht mehr gilt. Falls das mindestens eine optische Element beispielsweise eine Mikrolinsenanordnung mit darunter liegender Mikrostrukturanordnung ist, liegen die Mikrostrukturen unterhalb der Mikrolinsenanordnung dann nicht mehr in der Fokalebene der Mikrolinsen, sodass eine Abbildung der Mikrostrukturen dann nicht mehr möglich ist. Im Falle einer Mikroprismenanordnung auf der der Betrachtungsseite gegenüber liegenden Seite des Wert- und/oder Sicherheitsproduktes würde in einem solchen Falle unter den gewählten Bedingungen zumindest unter bestimmten Lichteinfallswinkeln keine Totalreflexion eintreten. Durch die veränderte optische Wahrnehmung erscheint das Muster des das mindestens eine optische Element überlagernden Strukturierungsmediums als optisch erkennbares Muster. Da das Strukturierungsmedium erfindungsgemäß einen dritten Brechungsindex n₃ aufweist, der größer ist als der erste Brechungsindex n₁ des optischen Elements, wird das Vorhandensein einer konkaven linsenförmigen Struktur als optisches Element simuliert, wenn das optische Element in Form von konvexen linsenförmigen Strukturen vorliegt, und umgekehrt. Dadurch wird ein völlig anderer optischer Effekt als mit herkömmlichen Konvexlinsenstrukturen erzielt. Bei einer Ausbildung des optischen Elements in Form von prismenförmigen Strukturen wird eine Totalreflexion innerhalb dieser Strukturen vollständig verhindert, sodass das optische Element in den mit dem Strukturierungsmedium versehenen Bereichen transparent erscheint.

In einer bevorzugten Ausführungsform ist der Unterschied zwischen n₁ und n₂ ungefähr gleich dem Unterschied zwischen n₁ und n₃, wobei n₂ < n₁ < n₃, d.h. das Umgebungsmedium (z.B. Luft) (n₂) weist den geringsten Brechungsindex, das Material des optischen Elements (n₁) weist einen größeren Brechungsindex als das Umgebungsmedium, und das Strukturierungsmedium (n₃) weist den größten Brechungsindex auf. In diesem Falle gilt n₁ - n₂ ≈ n₃ - n₁, woraus sich ergibt: (n₁ - n₂) + n₁ ≈ n₃. Unter Einhaltung einer Abweichung von ± 0,1 von der Bedingung n₁ - n₂ = n₃ - n₁ gilt: n₁ + (n₁ - n₂)-0,1 ≤ n₃ ≤ n₁ + (n₁ - n₂) + 0,1 und demnach 2n₁ - n₂ - 0,1 ≤ n₃ ≤ 2n₁ - n₂ + 0,1. In einer besonders bevorzugten Ausführungsform gilt: 2n₁ - n₂ - 0,01 ≤ n₃ ≤ 2n₁ - n₂ + 0,01. Ein wesentlicher Vorteil dieser Ausführungsform besteht darin, dass eine optisch brechende Struktur, welche beim Kontakt des optischen Elements (n₁) zum Umgebungsmedium (n₂) konvex ist, wenn n₃ > n₁ ist, durch den Kontakt des optischen Elements (n₁) zum Strukturierungsmedium (n₃) in eine gleichgeformte konkave Struktur umgewandelt wird. Hierdurch wird eine Inversion des Kippeffekts erreicht, d.h. dass beispielsweise unterhalb einer Mikrolinsenanordnung angeordnete Mikrostrukturen in dem Bereich, in dem sich das Strukturierungsmedium mit dem Brechungsindex n₃ befindet, von einem Betrachter beim kontinuierlichen Verändern des Betrachtungswinkels in einer Reihenfolge nacheinander wahrgenommen werden, die gegenüber der Reihenfolge in den Bereichen, in denen sich kein Strukturierungsmedium befindet, vertauscht ist.

In einer bevorzugten Weiterbildung der vorliegenden Erfindung ist das Strukturierungsmedium im sichtbaren Spektralbereich lichtabsorbierend und/oder lumineszierend. Damit ist das damit gebildete Muster über oder auf dem mindestens einen optischen Element leichter erkennbar. Falls das Strukturierungsmedium luminesziert oder wenn für die Lichtabsorption im sichtbaren Spektralbereich spezielle Farbstoffe, Pigmente, Farbstoff- oder Pigmentzusammenstellungen verwendet werden, deren spektrale Absorption nicht ohne weiteres nachstellbar ist, stellt diese weitere bevorzugte Weiterbildung der vorliegenden Erfindung ein zusätzliches Sicherheitsmerkmal dar. Insbesondere kann die Lumineszenz durch Strahlung anregbar sein, die nicht im sichtbaren Spektralbereich liegt, beispielsweise im UV-Bereich, sodass die Anwesenheit des Lumineszenzstoffes nicht ohne weiteres erkennbar ist. Für das transparente Strukturierungsmedium werden für eine Färbung lasierende Farbstoffe verwendet. Als Materialien für die Polymere können die vorstehend für das Wert- und/oder Sicherheitsprodukt angegebenen Polymermaterialien eingesetzt werden. Das das Strukturierungsmedium bildende Polymer kann beispielsweise ein Acrylharz basierender Lack sein. Das Acrylharz kann unter UV-Bestrahlung oder unter Wärmeeinwirkung aushärten.

In einer weiteren bevorzugten Weiterbildung der vorliegenden Erfindung wird das Strukturierungsmedium in dem mindestens einen musterbildenden Bereich mittels eines Druckverfahrens auf das mindestens eine optische Element aufgebracht. Der Druckverfahrensschritt kann insbesondere zusammen mit der Erzeugung weiterer Sicherheitsmerkmale durchgeführt werden, die ebenfalls mit einem Druckverfahren gebildet werden. Beispielsweise kann das erfindungsgemäße Sicherheitsmerkmal zusammen mit der Herstellung des Gesichtsbildes der Person, der das Wert- und/oder Sicherheitsprodukt zugeordnet ist, erzeugt werden.

Ganz besonders bevorzugt ist das Druckverfahren ein digitales Druckverfahren, da digitale Druckverfahren hinsichtlich des gewählten Motivs eine sehr große Flexibilität aufweisen. Das digitale Druckverfahren kann insbesondere ein Non-Impact-Druckverfahren, insbesondere ein Tintenstrahldruckverfahren (Inkjet-Verfahren), sein. Die für die Bildung des Strukturierungsmediums mittels des Tintenstrahldruckverfahrens verwendete Druckmittelzusammensetzung enthält vorzugsweise das das Strukturierungsmedium bildende Polymer und gegebenenfalls weitere übliche Komponenten, beispielsweise Antischaummittel, Stellmittel, Netzmittel, Tenside, Fließmittel, Trockner, Katalysatoren, (Licht-) Stabilisatoren, Konservierungsmittel, Biozide, Tenside, organische Polymere zur Viskositätseinstellung, Puffersysteme und dergleichen. Anstelle eines digitalen Druckverfahrens kann auch ein anderes Druckverfahren eingesetzt werden.

Mittels des mindestens einen Druckverfahrens wird das das Strukturierungsmedium bildende Druckmittel in einer zweidimensionalen Anordnung auf das mindestens eine optische Element aufgetragen, sodass das gewünschte Muster entsteht.

Zur Erzeugung eines Photos oder einer anderen Bilddarstellung für die strukturierte Bildung des Strukturierungsmediums kann die hierfür vorgesehene Vorlage in ein gerastertes Halbtonmuster überführt werden, indem beispielsweise ein Raster aus Bildpunkten oder Strichen in unterschiedlicher Punktgröße oder Linienbreite erzeugt wird. Dadurch wird ein Hell/Dunkel-Effekt gebildet, indem zueinander kontrastierende Musterbereiche gebildet werden.

Das mindestens eine Substrat, auf dessen mindestens einer Oberfläche sich das erfindungsgemäße Sicherheitsmerkmal befindet, kann durch jeweils eine Produktlage oder durch das Produkt selbst gebildet sein. Alternativ kann auch ein Vorprodukt für das Wert- und/oder Sicherheitsprodukt, das noch nicht alle Produktlagen, jedoch die meisten der Sicherheitsmerkmale des Dokuments aufweist, als Substrat verwendet werden.

Das Wert- und/oder Sicherheitsprodukt kann zusätzlich zu dem erfindungsgemäß hergestellten Sicherheitsmerkmal mindestens ein weiteres Sicherheitsmerkmal aufweisen, das entweder individualisierend oder nicht individualisierend ist. Als weitere Sicherheitsmerkmale kommen Guillochen, Wasserzeichen, Prägedrucke, ein Sicherheitsfaden, Mikroschrift, Durchsichtspasser und dergleichen in Betracht. Ferner kann das Dokument auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Dokuments versteckt angeordnet sein.

Zur näheren Erläuterung der vorliegenden Erfindung dienen die nachfolgend beschriebenen Figuren, die die Erfindung beispielhaft darstellen, ohne dass dadurch der Schutzbereich der Erfindung berührt wird:
- Fig. 1: zeigt eine Identitätskarte mit einem erfindungsgemäßen Sicherheitsmerkmal in einer isometrischen Darstellung in einer ersten Ausführungsform;
- Fig. 2: zeigt einen Teilschnitt durch das Sicherheitsmerkmal von Fig. 1; nicht erfingdungsgemäß A) n₁ > n₃ > n₂; erfindungsgemäß B) n₃ > n₁ > n₂ bei Betrachtung senkrecht zur Identitätskarte (α = 90°); erfindungsgemäß C) n₃ > n₁ > n₂ bei Betrachtung unter einem Winkel α ≠ 90°;
- Fig. 3: zeigt eine Identitätskarte mit einem erfindungsgemäßen Sicherheitsmerkmal in einer zweiten Ausführungsform; (A) bei senkrechter Betrachtung zur Oberfläche der Karte; (B) bei Betrachtung der Karte unter einem flachen Winkel;
- Fig. 4: zeigt Teilschnitte durch das Sicherheitsmerkmal von Fig. 3; (A) bei senkrechter Betrachtung zur Oberfläche der Karte; (B) bei Betrachtung der Karte unter einem flachem Winkel.

In den Figuren bezeichnen gleiche Bezugszeichen Elemente mit derselben Funktion oder dieselben Elemente.

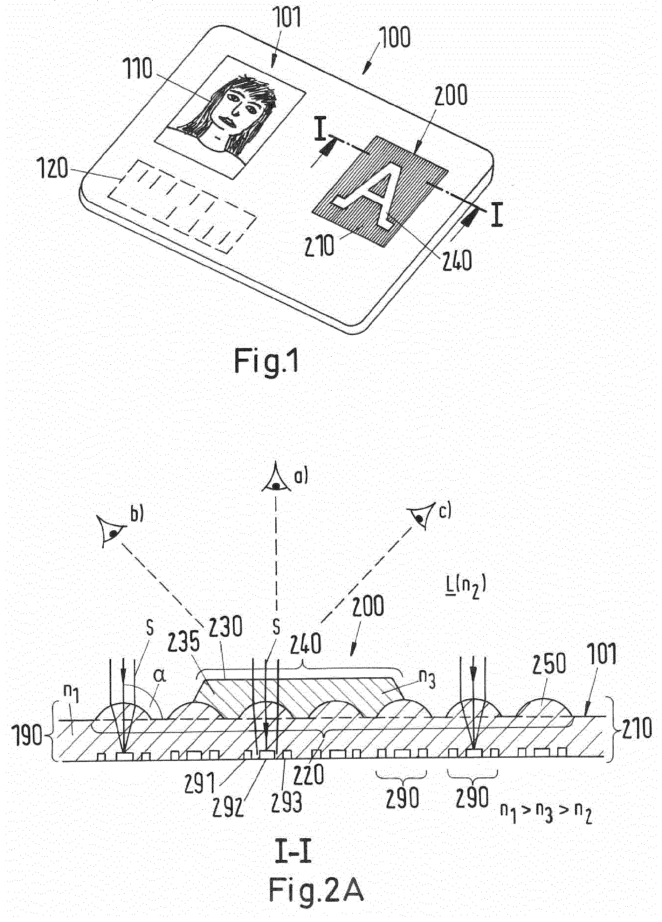

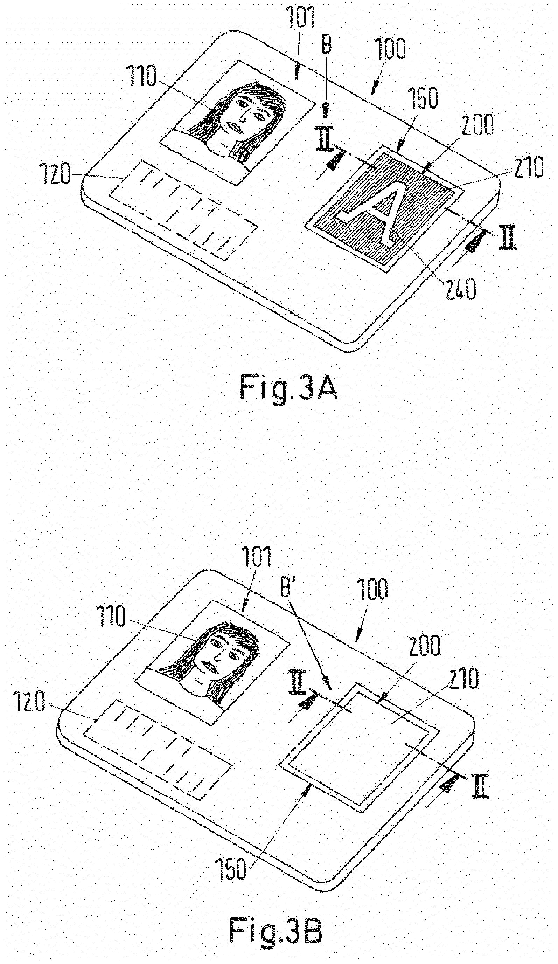

Die in den Fig. 1, 3 gezeigten beiden Ausführungsformen einer Identitätskarte 100 weisen jeweils ein übliches Format für die Karte auf, beispielsweise Format ID 1 gemäß ISO/IEC 7810. Die Karte kann als Laminat aus mehreren Polymerlagen hergestellt sein, die aus Polycarbonat und/oder Polyethylenterephthalat bestehen können. Einzelne dieser Lagen können mit Pigmenten opak eingefärbt sein, damit die Karte beispielsweise eine innenliegende elektronische Anordnung verbirgt. In der Ausführungsform der Karte in Fig. 3 befindet sich im Bereich des erfindungsgemäßen Sicherheitsmerkmals 200 beispielsweise ein transparentes Fenster 150, in dem die Karte vollständig transparent ist. Im Folgenden wird der Einfachheit halber davon ausgegangen, dass die Karte aus einer Polymerlage gebildet ist. Die Karte weist eine Vorderseite 101 und eine Rückseite (nicht dargestellt) auf. Sie kann beispielsweise eine Dicke von 800 µm haben. Die Karte kann mehrere Sicherheitsmerkmale aufweisen, beispielsweise ein Gesichtsbild 110 der Person, der die Karte zugeordnet ist, ferner ein Datenfeld 120, in dem Daten dieser Person in Klarschrift angegeben sind, sowie weitere Sicherheitsmerkmale, die nicht dargestellt sind.

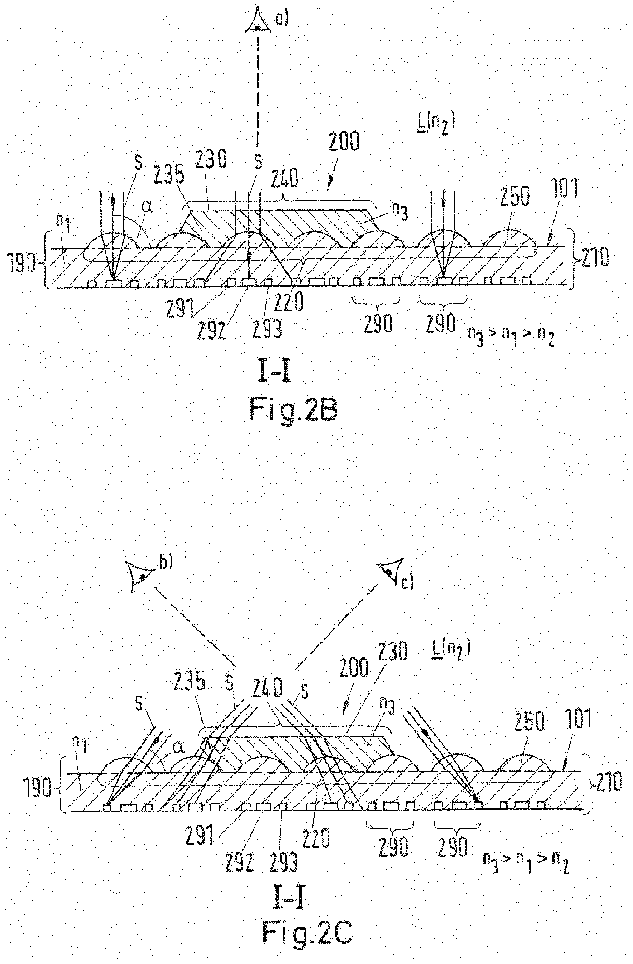

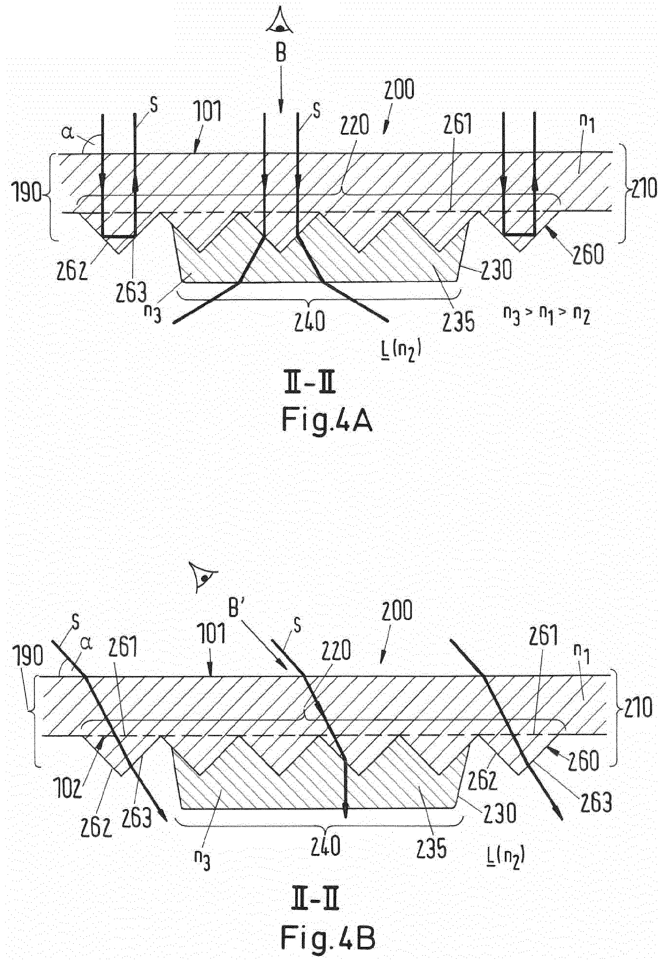

Ferner weist die Karte 100 ein erfindungsgemäßes Sicherheitsmerkmal 200 auf. Im vorliegenden Fall ist stellvertretend für eine beliebig anders gestaltete Kennzeichnung der Buchstabe A als Darstellung eines Musters wiedergegeben. Andere Darstellungen können durch irgendein Muster, einschließlich eines gerasterten Halbtonbildes des Gesichtsbildes des Karteninhabers, gebildet sein. In Fig. 2A, 2B, 2C, 4 sind jeweils Teilausschnitte von Schnittdarstellungen I-I bzw. II-II durch das Sicherheitsmerkmal wiedergegeben.

In der ersten Ausführungsform, die in Fig. 1, 2A, 2B, 2C gezeigt ist, ist das Sicherheitsmerkmal 200 durch eine optisch brechende Struktur 220 in Form einer Mikrolinsenanordnung mit einer darüber angeordneten Schicht 230 eines Strukturierungsmediums 235 gebildet. Die Mikrolinsenanordnung ist im vorliegenden Falle durch Mikrostablinsen 250 gebildet, d.h. durch zylindersegmentförmige Stäbe, die sich senkrecht zur Zeichenebene erstrecken. Alternativ kann es sich auch um kalottenförmige sphärische oder asphärische Mikrolinsen handeln. Diese Mikrolinsen weisen beispielsweise einen Abstand (Entfernung zwischen Scheiteln benachbarter Mikrolinsen) von ca. 100 µm zueinander auf. Die Mikrolinsen erstrecken sich über das gesamte Feld des Sicherheitsmerkmals 200.

Die Mikrolinsenanordnung 220 kann beispielsweise durch Abformung mittels eines Prägestempels unter Ultraschalleinwirkung auf eine transparente Polymerlage 190, in der die zylindersegmentförmigen Mikrolinsenstäbe 250 erzeugt sind, hergestellt sein. Die stabförmigen Erhöhungen sind Teil der Polymerlage. Die konvexen Wölbungen der Mikrostablinsen bilden stabförmige Erhöhungen in der Oberfläche 101 der Polymerlage. Das Sicherheitsmerkmal mit der Mikrolinsenanordnung kann sich in einer Vertiefung an der Kartenoberfläche befinden, um zu vermeiden, dass die vorstehenden Mikrolinsen durch mechanische Abnutzung beim Gebrauch abgerieben werden, woraufhin der Kippeffekt verloren gehen würde. Vorzugsweise können die Scheitel der Mikrolinsen etwa auf der Höhe der den vertieften Bereich des Sicherheitsmerkmals liegenden Kartenoberfläche liegen. Die Polymerlage kann beispielsweise aus Polycarbonat gebildet sein. Das Material der Polymerlage weist einen ersten Brechungsindex n₁ auf, der höher als der zweite Brechungsindex n₂ des Umgebungsmediums L (Luft) ist, das sich oberhalb des optischen Elements 210 befindet. Luft weist für Strahlung im sichtbaren Spektralbereich einen Brechungsindex n₂ von ungefähr 1,0 auf.

Unterhalb der Mikrolinsenanordnung 220 sind Mikrostrukturen 290 beispielsweise mittels eines Druckverfahrens gebildet. Die Mikrostrukturen bilden jeweils Muster, beispielsweise alphanumerische Zeichen oder nebeneinander liegende Farbpunkte, etwa jeweils ein roter, ein grüner und ein blauer Punkt, wobei beim Druck unterschiedliche Mikrostrukturen an verschiedenen Stellen in der Fokalebene erzeugt sind. Die dadurch erhaltenen Druckbilder sind bei Betrachtung unter dem jeweiligen Betrachtungswinkel erkennbar, sodass jeweils eine Zeichenart unter einem Betrachtungswinkel α erscheint. Eine derartige Anordnung ist als CLI bekannt.

In einem musterbildenden Bereich 240 auf der Mikrolinsenanordnung 220 ist ferner das Strukturierungsmaterial 235 in Form einer Schicht 230 aufgebracht. Dieses Material bildet das Strukturierungsmedium. Es hat einen dritten Brechungsindex n₃. Das Material ist im vorliegenden Beispiel ein transparentes Polymer. Der dritte Brechungsindex n₃ ist im Falle der nicht erfindungsgemäßen Ausführungsform von Fig. 2A kleiner als der erste Brechungsindex n₁, aber größer als der zweite Brechungsindex n₂. Dadurch wird der in die Mikrolinsenanordnung einfallende Lichtstrahl S anders gebrochen als in dem nicht musterbildenden Bereich, sodass sich die unterhalb der Mikrolinsenanordnung angeordneten Mikrostrukturen 290 nicht mehr in der Fokalebene befinden. Aus diesem Grunde sind diese Strukturen nicht mehr scharf erkennbar. Dadurch ergibt sich ein Kontrast zwischen dem musterbildenden Bereich, in dem die Schicht des Strukturierungsmediums aufgebracht ist und dem angrenzenden Bereich, in dem sich die nicht modifizierte Mikrolinsenanordnung befindet.

In einer erfindungsgemäßen Ausführungsform, in der der Brechungsindex n₃ des Strukturierungsmaterials 235 größer ist als n₁ und damit auch größer als n₂ (Fig. 2B, 2C) ergibt sich noch eine andere Brechung des Lichtstrahls. Durch die Festlegung, dass n₃ größer ist als n₁, werden konkave Zylinderlinsen simuliert. Die unter den Zylinderlinsen liegenden Mikrostrukturen werden in diesem Falle nicht mehr aufgelöst und daher nur unscharf dargestellt. Handelt es sich beispielsweise um nebeneinander liegende farbige Punkte, etwa einen roten Punkt 291, einen grünen Punkt 292 und einen blauen Punkt 293, so werden diese von einem Betrachterauge gleichzeitig erfasst und ergeben demgemäß bei Betrachtung aus einer Richtung senkrecht zur Oberfläche des Sicherheitsmerkmals 200 (α = 90°; Fall a) einen unscharfen grauen Fleck (Fig. 2B). Beim Wechsel des Betrachtungswinkels nach links (zum Beispiel α = 135°, Fall b) wird am Rand der blaue Punkt 293 zumindest teilweise noch erfasst, sodass dieses Element als blau gefärbter unscharfer Fleck erkennbar wird. In entsprechender Weise wird beim Wechsel des Betrachtungswinkels nach rechts (zum Beispiel α = 45°, Fall c) am Rand der rote Punkt 291 zumindest teilweise noch erfasst, sodass dieses Element als rot gefärbter Fleck erkennbar wird (Fig. 2C). Somit bildet sich auch in dem musterbildenden Bereich ein Kippeffekt aus, der sich jedoch von dem Kippeffekt außerhalb dieses Bereiches unterscheidet.

Der Kontrast zwischen dem mit dem Strukturierungsmaterial 235 bedeckten (musterbildenden) Oberflächenbereich 240 und dem nicht bedeckten Bereich kann noch dadurch erhöht werden, dass das Material des Strukturierungsmediums mit einem lasierenden Farbstoff eingefärbt ist. Im vorliegenden Fall ist durch den gebildeten Kontrast der Buchstabe A erkennbar, der ein für den Karteninhaber personalisierendes Merkmal darstellt.

Zur Herstellung der Schicht 230 des Strukturierungsmediums 235 in dem musterbildenden Bereich 240 kann das hierfür vorgesehene Material in Form eines Lackes mittels eines Tintenstrahldruckverfahrens auf die Oberseite die Mikrolinsenanordnung aufgebracht werden. Dieser Lack kann nach dem Aufbringen beispielsweise mittels UV-Strahlung gehärtet werden.

Das in den Fig. 3, 4 dargestellte Sicherheitsmerkmal 200 in der zweiten Ausführungsform weist an der Unterseite 102 der Polymerlage 190 (Karte 100) eine Mikroprismenanordnung 220 auf. Damit diese Mikroprismenanordnung von der Vorderseite 101 der Karte 100 erkennbar ist, weist die Karte in dem Bereich der Mikroprismenanordnung ein transparentes Fenster 150 auf. Wäre die Mikroprismenanordnung, anders als in Fig. 3, 4 dargestellt, an der Oberseite 101 der Karte angeordnet, bräuchte diese kein transparentes Fenster aufzuweisen.

Die Mikroprismenanordnung 220 besteht beispielsweise aus langgestreckten Mikrostabprismen 260, die sich senkrecht zur Zeichenebene erstrecken. Die stabförmigen Mikroprismen weisen beispielsweise einen Abstand (Entfernung zwischen Scheiteln benachbarter Mikroprismen) von ca. 100 µm zueinander auf. Die Mikroprismen erstrecken sich über das gesamte Feld des Sicherheitsmerkmals 200. Die Basisflächen 261 der Mikroprismen erstrecken sich parallel zur Ebene der Polymerlage 190. Die Seitenflächen 262, 263 der Mikroprismen bilden stabförmige Erhebungen an der Unterseite 102 der Polymerlage. Wie im Falle der Mikrolinsenanordnung kann auch die Mikroprismenanordnung an der Unterseite 102 der Karte vertieft angeordnet sein, um zu vermeiden, dass die Mikroprismen beim Gebrauch der Karte abgerieben werden. Die Mikrostabprismen sind parallel zu ihrer Längserstreckung spiegelsymmetrisch, da die Seitenflächen jeweils gleich groß sind.

Die Mikroprismenanordnung 220 kann wie die in der ersten Ausführungsform eingesetzte Mikrolinsenanordnung mit einem Prägeverfahren in der Polymerlage 190, deren untere Oberfläche 102 durch die Mikroprismen 260 gebildet ist, hergestellt werden. Insofern wird auf die obigen Erläuterungen zur Herstellung der Mikrolinsenanordnung verwiesen. Die Polymerlage und damit die Mikroprismen haben einen ersten Brechungsindex n₁.

Die Seitenflächen 262, 263 der Mikroprismen 260 stehen mit dem Umgebungsmedium L (Luft, zweiter Brechungsindex n₂ ≈ 1,0) in Kontakt.

Zur Erzeugung des erfindungsgemäßen Sicherheitsmerkmals 200 wird in musterbildenden Bereichen 240 auf der Mikroprismenanordnung 220 eine Schicht 230 des Strukturierungsmediums 235 gebildet. Hierzu kann ein Lack mittels eines Tintenstrahldruckverfahrens auf die Mikroprismenanordnung aufgetragen und anschließend mittels UV-Strahlung gehärtet werden. Das derart gebildete Muster kann für eine Information kodieren, die ein Merkmal des Karteninhabers oder der Karte 100 selbst wiedergibt. Im vorliegenden Beispiel ist die Schicht in dem musterbildenden Bereich 240 in Form des Buchstabens A erzeugt. Das Strukturierungsmedium hat den dritten Brechungsindex n₃. Der dritte Brechungsindex n₃ ist größer als der erste Brechungsindex n₁ der Mikroprismen 260 der Polymerlage 190, und dieser ist wiederum größer als der zweite Brechungsindex n₂ des Umgebungsmediums L.

Bei Betrachtung des erfindungsgemäßen Sicherheitsmerkmals 200 etwa senkrecht zur Kartenoberfläche 101 (Betrachtungsrichtung B; Fig. 3A, 4A) erscheinen die Bereiche des Sicherheitsmerkmals reflektierend, die sich außerhalb des musterbildenden Bereiches 240 befinden, da in das Sicherheitsmerkmal einfallende Strahlung S in diesen Bereichen totalreflektiert wird. Dagegen reflektieren die musterbildenden Bereiche nicht (Fig. 3A, 4A).

Im Gegensatz hierzu erscheinen die Bereiche außerhalb des musterbildenden Bereiches 240 bei Betrachtung des Sicherheitsmerkmals 200 unter einem flachen Winkel α (Betrachtungsrichtung B'; Fig. 3B, 4B) nicht mehr reflektierend, da in das Sicherheitsmerkmal einfallende Strahlung S in diesen Bereichen nicht reflektiert wird. Auch innerhalb dieses Bereiches einfallendes Licht kann das Sicherheitsmerkmal passieren, sodass das optische Element sämtlich nicht reflektiert.

### Bezugszeichen

- 100: Identitätskarte, Wert- und/oder Sicherheitsprodukt/-dokument
- 101: Vorderseite
- 102: Unterseite
- 110: Gesichtsbild
- 120: Datenfeld
- 150: transparentes Fenster
- 190: transparente Polymerlage
- 200: Sicherheitsmerkmal
- 210: optisches Element
- 220: optisch brechende Struktur, Mikrolinsenanordnung, Mikroprismenanordnung
- 230: Schicht eines Strukturierungsmediums 235
- 235: Strukturierungsmedium/-material
- 240: musterbildender (Oberflächen-)Bereich
- 250: Mikro(stab-)linsen
- 260: Mikro(stab-)prismen
- 261: Basisfläche der Mikrostabprismen
- 262, 263: Seitenflächen der Mikrostabprismen
- 290: Mikrostrukturen
- 291: roter Punkt der Mikrostrukturen
- 292: grüner Punkt der Mikrostrukturen
- 293: blauer Punkt der Mikrostrukturen
- B, B': Betrachtungsrichtung
- L: Umgebungsmedium
- n₁: erster optischer Brechungsindex der Polymerlage
- n₂: zweiter optischer Brechungsindex des Umgebungsmediums
- n₃: dritter optischer Brechungsindex des Strukturierungsmediums
- S: einfallende Strahlung

## Patentansprüche

1. Sicherheitsmerkmal (200) für ein Wert- und/oder Sicherheitsprodukt (100), das folgende Merkmale aufweist:
(a) das Sicherheitsmerkmal (200) weist mindestens ein optisches Element (210) auf, das aus einem einen ersten Brechungsindex n₁ aufweisenden Material gebildet ist;
(b) das mindestens eine optische Element (210) weist optisch brechende Strukturen (220) auf, an denen von einem Umgebungsmedium (L) mit einem zweiten Brechungsindex n₂ in das Sicherheitsmerkmal (200) einfallende Strahlung (S) gebrochen wird oder an denen in das mindestens eine optische Element (210) eingefallene Strahlung (S) totalreflektiert wird;
wobei das mindestens eine optische Element (210) in mindestens einem musterbildenden Bereich (240) mit einem Strukturierungsmedium (235) überlagert ist;
wobei das Strukturierungsmedium (235) transparent ist und einen dritten Brechungsindex n₃ aufweist, wobei der dritte Brechungsindex n₃ größer ist als der erste Brechungsindex n₁,
**dadurch gekennzeichnet, dass**
das Strukturierungsmedium (235) über dem mindestens einen optischen Element (210) eine personalisierende Kennzeichnung bildet.

2. Sicherheitsmerkmal (200) für ein Wert- und/oder Sicherheitsprodukt (100) nach einem der vorstehenden Ansprüche, **dadurch gekennzeichnet, dass** das mindestens eine optische Element (210) durch eine Anordnung von Mikrolinsen (250) gebildet ist.

3. Sicherheitsmerkmal (200) für ein Wert- und/oder Sicherheitsprodukt (100) nach Anspruch 2, **dadurch gekennzeichnet, dass** die Mikrolinsen (250) rasterartig angeordnete Konvexlinsen sind.

4. Sicherheitsmerkmal (200) für ein Wert- und/oder Sicherheitsprodukt (100) nach einem der Ansprüche 2 oder 3, **dadurch gekennzeichnet, dass** das Sicherheitsmerkmal (200) ein CLI (changeable laser image) oder ein MLI (multiple laser image) bildet.

5. Sicherheitsmerkmal (200) für ein Wert- und/oder Sicherheitsprodukt (100) nach Anspruch 1, **dadurch gekennzeichnet, dass** das mindestens eine optische Element (210) durch eine Anordnung von Mikroprismen (260) gebildet ist.

6. Sicherheitsmerkmal (200) für ein Wert- und/oder Sicherheitsprodukt (100) nach einem der vorstehenden Ansprüche, **dadurch gekennzeichnet, dass** das Strukturierungsmedium (235) lichtabsorbierend und/oder lumineszierend ist.

7. Sicherheitsmerkmal (200) für ein Wert- und/oder Sicherheitsprodukt (100) nach Anspruch 6, **dadurch gekennzeichnet, dass** das Strukturierungsmedium (235) im sichtbaren Spektralbereich lichtabsorbierend und/oder lumineszierend ist.

8. Wert- und/oder Sicherheitsprodukt (100) mit mindestens einem Sicherheitsmerkmal (200) nach einem der Ansprüche 1 bis 7.

9. Verfahren zum Herstellen eines Sicherheitsmerkmals (200), umfassend folgende Verfahrensschritte:
(a) Bereitstellen mindestens eines optischen Elements (210), das aus einem einen ersten Brechungsindex n₁ aufweisenden Material gebildet ist und optisch brechende Strukturen (220) aufweist, an denen von einem Umgebungsmedium (L) mit einem zweiten Brechungsindex n₂ in das Sicherheitsmerkmal (200) einfallende Strahlung (S) gebrochen oder an denen in das mindestens eine optische Element (210) eingefallene Strahlung (S) totalreflektiert wird;
(b) Überlagern des mindestens einen optischen Elements (210) in mindestens einem musterbildenden Bereich (240) mit einem Strukturierungsmedium (235);
wobei das Strukturierungsmedium (235) transparent ist und einen dritten Brechungsindex n₃ aufweist, wobei der dritte Brechungsindex n₃ größer ist als der erste Brechungsindex n₁,
**dadurch gekennzeichnet, dass** das Strukturierungsmedium (235) in dem mindestens einen musterbildenden Bereich (240) unter Ausbildung einer personalisierenden Kennzeichnung aufgebracht wird.

10. Verfahren zum Herstellen eines Sicherheitsmerkmals (200) nach Anspruch 9, **dadurch gekennzeichnet, dass** das Strukturierungsmedium (235) in dem mindestens einen musterbildenden Bereich (240) mittels eines Druckverfahrens auf das mindestens eine optische Element (210) aufgebracht wird.

11. Verfahren zum Herstellen eines Sicherheitsmerkmals (200) nach Anspruch 10, **dadurch gekennzeichnet, dass** das Druckverfahren ein digitales Druckverfahren ist.

## Claims

1. Security feature (200) for a product of value and/or a security product (100), which exhibits the following features:
(a) the security feature (200) comprises at least one optical element (210), which is formed from a transparent material having a first refractive index n₁;
(b) the at least one optical element (210) comprises optically refractive structures (220), at which radiation (S), incident on the security feature (200) from a surrounding medium (L) with a second refractive index n₂, is refracted, or at which structures radiation (S) already entered into the at least one optical element (210) is subjected to total internal reflection;
wherein the at least one optical element (210) is superposed with a transparent structuring medium (235) in at least one pattern-forming region; (240),
wherein the structuring medium (235) exhibits a third refractive index n₃,
wherein the third refractive index n₃ is greater than the first refractive index n₁,
**characterised in that**
the structuring medium (235) forms a personalising marking above the at least one optical element (210).

2. Security feature (200) for a product of value and/or a security product (100) according to any one of the preceding claims, **characterised in that** the at least one optical element (210) is formed by an arrangement of microlenses (250).

3. Security feature (200) for a product of value and/or a security product (100) according to claim 2, **characterised in that** the microlenses (250) are convex lenses arranged in a raster pattern.

4. Security feature (200) for a product of value and/or a security product (100) according to one of claims 2 and 3, **characterised in that** the security feature (200) forms a CLI (changeable laser image) or an MLI (multiple laser image).

5. Security feature (200) for a product of value and/or a security product (100) according to claim 1, **characterised in that** the at least one optical element (210) is formed by an arrangement of microprisms (260).

6. Security feature (200) for a product of value and/or a security product (100) according to any one of the preceding claims, **characterised in that** the structuring medium (235) is light-absorbing and/or luminescent.

7. Security feature (200) for a product of value and/or a security product (100) according to claim 6, **characterised in that** the structuring medium (235) is, in the visible spectral range, light-absorbing and/or luminescent.

8. Product of value and/or a security product (100) with at least security feature (200) according to any one of claims 1 to 7.

9. Method for producing a security feature (200), comprising the following method steps:
(a) Provision of at least one optical element (210), which is formed from a transparent material exhibiting a refractive index n₁, and comprises optically refractive structures (220), at which radiation (S), incident on the security feature (200) from a surrounding medium (L) with a second refractive index n₂, is refracted, or at which structures radiation (S) already entered into the at least one optical element (210) is subjected to total internal reflection;
(b) Superposing of the at least one optical element (210) in at least one pattern-forming region (240) with a transparent structuring medium (235); wherein the structuring medium (235) exhibits a third refractive index n₃, wherein the third refractive index n₃ is greater than the first refractive index n₁, **characterised in that** the structuring medium (235) is applied in the at least one pattern-forming region (240) with the forming of a personalising marking.

10. Method for producing a security feature (200) according to claim 9, **characterised in that** the structuring medium (235) is applied in the at least one pattern-forming region (240) by means of a printing process onto the at least one optical element (210).

11. Method for producing a security feature (200) according to claim 10, **characterised in that** the printing process is a digital printing process.

## Revendications

1. Caractéristique de sécurité (200) pour un produit de valeur et/ou de sécurité (100), qui présente les caractéristiques suivantes :
(a) la caractéristique de sécurité (200) présente au moins un élément optique (210), qui est formé d'un matériau transparent présentant un premier indice de réfraction n₁ ;
(b) l'au moins un élément optique (210) présente des structures optiquement réfringentes (220) sur lesquelles le rayonnement (S) incident sur la caractéristique de sécurité (200) d'un milieu environnant (L) avec un deuxième indice de réfraction n₂ est réfracté ou sur lesquelles le rayonnement (S) incident sur l'au moins un élément optique (210) est totalement réfléchi ;
dans laquelle l'au moins un élément optique (210) est recouvert dans au moins une région (240) formant un motif d'un milieu de structuration (235) transparent ;
le milieu de structuration (235) présente un troisième indice de réfraction n₃, dans laquelle le troisième indice de réfraction n₃ est supérieur au premier indice de réfraction n₁,
**caractérisée en ce que** le milieu de structuration (235) forme un marquage personnalisé sur l'au moins un élément optique (210).

2. Caractéristique de sécurité (200) pour un produit de valeur et/ou de sécurité (100) selon l'une quelconque des revendications précédentes, **caractérisée en ce que** l'au moins un élément optique (210) est formé par un agencement de microlentilles (250).

3. Caractéristique de sécurité (200) pour un produit de valeur et/ou de sécurité (100) selon la revendication 2, **caractérisée en ce que** les microlentilles (250) sont des lentilles convexes agencées en forme de trame.

4. Caractéristique de sécurité (200) pour un produit de valeur et/ou de sécurité (100) selon l'une des revendications 2 et 3, **caractérisée en ce que** la caractéristique de sécurité (200) forme une image laser variable (CLI) ou une image laser multiple (MLI).

5. Caractéristique de sécurité (200) pour un produit de valeur et/ou de sécurité (100) selon la revendication 1, **caractérisée en ce que** l'au moins un élément optique (210) est formé par un agencement de microprismes (260).

6. Caractéristique de sécurité (200) pour un produit de valeur et/ou de sécurité (100) selon l'une quelconque des revendications précédentes, **caractérisée en ce que** le milieu de structuration (235) est absorbeur de lumière et/ou luminescent.

7. Caractéristique de sécurité (200) pour un produit de valeur et/ou de sécurité (100) selon la revendication 6, **caractérisée en ce que** le milieu de structuration (235) est absorbeur de lumière et/ou luminescent dans le domaine spectral visible.

8. Produit de valeur et/ou de sécurité (100) avec au moins une caractéristique de sécurité (200) selon l'une quelconque des revendications 1 à 7.

9. Procédé de production d'une caractéristique de sécurité (200), comprenant les étapes de procédé suivantes :
(a) mettre à disposition au moins un élément optique (210), qui est formé d'un matériau transparent présentant un premier indice de réfraction n₁ et présente des structures optiquement réfringentes (220), sur lesquelles le rayonnement (S) incident sur la caractéristique de sécurité (200) d'un milieu environnant (L) avec un deuxième indice de réfraction n₂ est réfracté ou sur lesquelles le rayonnement (S) incident sur l'au moins un élément optique (210) est totalement réfléchi ;
(b) recouvrir l'au moins un élément optique (210) dans au moins une région (240) formant un motif d'un milieu de structuration (235) transparent ;
le milieu de structuration (235) présente un troisième indice de réfraction n₃, le troisième indice de réfraction n₃ étant supérieur au premier indice de réfraction n₁,
**caractérisé en ce que** le milieu de structuration (235) est appliqué dans l'au moins une région (240) formant un motif en formant un marquage personnalisé.

10. Procédé de production d'une caractéristique de sécurité (200) selon la revendication 9, **caractérisé en ce que** le milieu de structuration (235) est appliqué sur l'au moins un élément optique (210) dans l'au moins une région (240) formant un motif au moyen d'un procédé d'impression.

11. Procédé de production d'une caractéristique de sécurité (200) selon la revendication 10, **caractérisé en ce que** le procédé d'impression est un procédé d'impression numérique.
